# EUROPEAN PATENT APPLICATION

(11) **EP 2 902 237 A1**
(43) Date of publication of application: **05.08.2015**
(21) Application number: 15153109.2
(22) Date of filing: 29.01.2015
(51) Int. Cl.: B60K 6/48, B60W 20/00, B60W 30/18, B60W 10/02, B60W 10/08, B60W 10/10, F16H 61/21

(54) **Drive system for vehicle and controlling method thereof**

(30) Priority: 30.01.2014 JP 2014016008
(71) Applicant: Aisin Seiki Kabushiki Kaisha, Kariya-shi Aichi 448-8650 (JP)
(72) Inventor: Suzuki, Yoshihide, Kariya-shi, Aichi 448-0027 (JP); Harada, Shinya, Kariya-shi, Aichi 448-8650 (JP); Shishido, Yo, Kariya-shi, Aichi 448-8650 (JP)
(74) Representative: Kramer Barske Schmidtchen Patentanwälte PartG mbB

(57) **Abstract**

A drive system (100) for a vehicle includes a driving source (2), a motor generator (6), a transmission (50), a clutch (3), and a control device (1) controlling the transmission (50) to receive a rotational torque of the output shaft (42, 43) transmitted from the driving wheel (Wr, Wl) at the motor generator (6) when a coast shift down is performed in a first state where the driving source (2) and the transmission (50) are disconnected from each other by the clutch (3) and the motor generator (6) is connected to the output shaft (42, 43) to receive the rotational torque, the control device (1) controlling the transmission (50) to receive the rotational torque at the driving source (2) by an engagement of the clutch (3) in a second state where the motor generator (6) is disconnected from the output shaft (42, 43) and does not receive the rotational torque.

## Description

### TECHNICAL FIELD

This disclosure generally relates to a drive system for a vehicle and a controlling method thereof.

### BACKGROUND DISCUSSION

A known drive system for a hybrid electric vehicle disclosed in JP2010-188795A (hereinafter referred to as Patent reference 1) is provided with an engine and a motor generator and outputs a rotational torque of at least one of the engine and the motor generator to an output shaft which is rotationally connected to driving wheels. The motor generator of the known drive system for the hybrid electric vehicle disclosed in Patent reference 1 generates the electricity (regeneration) by the application of the rotational torque of the output shaft in a case where a request for acceleration is not inputted (including a case where a request for braking is inputted). The application of the rotational torque of the output shaft which is rotationally connected to the driving wheels for the regeneration is referred to as a regenerative braking.

In a case where the drive system for the hybrid electric vehicle disclosed in Patent reference 1 performs the regenerative braking and receives a gearshift request of a transmission between the motor generator and the output shaft, gears come to be temporarily in a neutral state when the transmission is shifted from a current gear stage to a required gear stage. When the gears are temporarily in the neutral state and the rotational connection between the output shaft and the motor generator is disconnected, the rotational torque of the output shaft received at the motor generator by then by the application of the regenerative braking cannot be received at the motor generator, so that a torque loss occurs.

In a case where the hybrid electric vehicle including the drive system performs the regenerative braking and descends a downward slope, the rotational torque of the output shaft increases because the vehicle speed increases. In a case where the rotary speed of the motor generator exceeds an upper limit (for example, a revolution limit or a rev limit) for effective performance of the regeneration, the rotational torque cannot be received at the motor generator any further. Thus, the rotational torque exceeding the upper limit results in the torque loss. In addition, in a case where an operator shifts the gear stage to reduce the rotary speed of the motor generator to prevent the torque loss, the gears come to be in the neutral state temporarily. That is, the rotational connection between the output shaft and the motor generator is disconnected, so that the rotational torque received at the motor generator by then cannot be received at the motor generator, leading to lose the rotational torque.

An operator may feel an idle running feeling due to the torque loss of a negative torque, leading to a deterioration of the drivability.

A need thus exists for a drive system for a vehicle and a controlling method thereof that reduce or prevent a torque loss when a regenerative braking is performed.

### SUMMARY

According to an aspect of this disclosure, a drive system for a vehicle includes a driving source generating a rotational torque, a motor generator generating the rotational torque by an application of electric power, the motor generator generating electricity by receiving the rotational torque of an output shaft rotationally connected to a driving wheel, a transmission selectively connecting and rotationally connecting at least one of the driving source and the motor generator to the output shaft, a clutch connecting the driving source to the transmission and disconnecting the driving source from the transmission, and a control device controlling the transmission to receive the rotational torque of the output shaft transmitted from the driving wheel at the motor generator when a coast shift down is performed in a first state where the driving source and the transmission are disconnected from each other by the clutch and the motor generator is connected to the output shaft to receive the rotational torque transmitted from the driving wheel, the control device controlling the transmission to receive the rotational torque of the output shaft at the driving source by an engagement of the clutch in a second state where the motor generator is disconnected from the output shaft and does not receive the rotational torque.

According to the construction of this disclosure, the motor generator generates the electricity (regenerative braking) by the application of the rotational torque transmitted from the output shaft in the first state. Further, in the second state where the torque loss may occur because the regenerative braking cannot be performed efficiently, the rotational torque transmitted from the output shaft is inputted to the driving source, so that the rotary speed of the output shaft can be reduced by the driving source by the inertia. Accordingly, the torque loss can be reduced or prevented in a case where the motor generation cannot perform the regenerative braking efficiently.

According to another aspect of this disclosure, the driving source corresponds to an engine.

According to the aforementioned construction, the torque loss can be reduced or prevented by the engine brake in a case where the motor generator cannot perform regenerative braking efficiently by the application of the rotational torque of the output shaft in the second state.

According to further aspect of this disclosure, the second state corresponds to a state where a request for generating the rotational torque is not inputted to the driving source, a rotary speed of the output shaft is decreased, and a rotational connection of the output shaft and the motor generator is temporarily released for a downshifting by the transmission.

According to the aforementioned construction, the rotational connection between the output shaft and the motor generation is released because the gear of the transmission comes to be in the neutral state to downshift the gear in a case where the motor generator performs the regenerative braking. Accordingly, the rotational torque transmitted from the driving wheels Wr, WI cannot be received at the motor generator. In such cases, the driving source receives the rotational torque transmitted from the output shaft, so that the torque loss can be reduced or prevented efficiently.

According to another aspect of this disclosure, the second state corresponds to a state where a request for generating the rotational torque is not inputted to the driving source, a rotary speed of the output shaft is increased, and a rotational connection of the output shaft and the motor generator is temporarily released for an upshifting by the transmission.

According to the aforementioned construction, the rotational connection between the output shaft and the motor generation is released because the gear of the transmission comes to be in the neutral state to upshift the gear in a state where the motor generator performs the regenerative braking. Accordingly, the rotational torque transmitted from the driving wheels Wr, WI cannot be received at the motor generator. In such cases, the driving source receives the rotational torque transmitted from the output shaft, so that the torque loss can be reduced or prevented efficiently.

According to another aspect of this disclosure, in a state where a rotary speed of the motor generator is decreased and prior to a timing for a gearshift of the transmission, the control device controls the clutch to be gradually engaged to increase the rotational torque transmitted from the driving wheel to the driving source and to decrease the rotational torque transmitted from the driving wheel and received at the motor generator to establish the second state.

According to the aforementioned construction, the rotational torque transmitted from the output shaft is inputted to the driving source in a state where the motor generator cannot perform the regenerative braking efficiently. Accordingly, the torque loss can be reduced or prevented, leading to the prevention of the deterioration of the drivability.

According to still another aspect of this disclosure, the control device controls the clutch to be completely engaged to maximize the rotational torque outputted to the driving source, the control device controls an actuator which shifts gears of the transmission to be activated when the rotational torque transmitted from the driving wheel and received at the motor generator comes to be zero.

According to the aforementioned construction, the rotational torque transmitted from the output shaft is inputted to the driving source in a state where the motor generator cannot perform the regenerative braking efficiently. Accordingly, the torque loss can be reduced or prevented, leading to the prevention of the deterioration of the drivability.

According to still further aspect of this disclosure, when a gearshift is completed, the control device controls the clutch to be gradually disengaged to decrease the rotational torque transmitted from the driving wheel to the driving source and to increase the rotational torque transmitted from the driving wheel and received at the motor generator.

According to the aforementioned construction, the rotational torque transmitted from the output shaft is inputted to the driving source in a state where the motor generator cannot perform the regenerative braking efficiently. Accordingly, the torque loss can be reduced or prevented, leading to the prevention of the deterioration of the drivability.

According to still another aspect of this disclosure, the control device controls the clutch to be completely disengaged so that the motor generator sorely receives the rotational torque transmitted from the driving wheel.

According to the aforementioned construction, the rotational torque transmitted from the output shaft is inputted to the driving source in a state where the motor generator cannot perform the regenerative braking efficiently. Accordingly, the torque loss can be reduced or prevented, leading to the prevention of the deterioration of the drivability.

According to further aspect of this disclosure, a controlling method for a drive system for a vehicle, the drive system for the vehicle includes a drive system for a vehicle includes a driving source generating a rotational torque, a motor generator generating the rotational torque by an application of electric power, the motor generator generating electricity by receiving the rotational torque of an output shaft rotationally connected to a driving wheel, a transmission selectively connecting and rotationally connecting at least one of the driving source and the motor generator to the output shaft, a clutch connecting the driving source to the transmission and disconnecting the driving source from the transmission, and a control device controlling the transmission to receive the rotational torque of the output shaft transmitted from the driving wheel at the motor generator when a coast shift down is performed in a first state where the driving source and the transmission are disconnected from each other by the clutch and the motor generator is connected to the output shaft to receive the rotational torque transmitted from the driving wheel, the control device controlling the transmission to receive the rotational torque of the output shaft at the driving source by an engagement of the clutch in a second state where the motor generator is disconnected from the output shaft and does not receive the rotational torque.

According to the construction of this disclosure, the motor generator generates the electricity (regenerative braking) by the application of the rotational torque transmitted from the output shaft in the first state. Further, in the second state where the torque loss may occur because the regenerative braking cannot be performed efficiently, the rotational torque transmitted from the output shaft is inputted to the driving source, so that the rotary speed of the output shaft can be reduced by the driving source by the inertia. Accordingly, the torque loss can be reduced or prevented in a case where the motor generation cannot perform the regenerative braking efficiently.

According to the aforementioned construction, the rotational torque transmitted from the output shaft is inputted to the driving source in a state where the motor generator cannot perform the regenerative braking efficiently. Accordingly, the torque loss can be reduced or prevented, leading to the prevention of the deterioration of the drivability.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram illustrating a structure of a drive system for a vehicle according to an embodiment disclosed here;
Fig. 2 is a view showing an example of a gear train of the drive system for the vehicle according to the embodiment;
Fig. 3 is a time chart showing a rotary speed, a shift stroke and a torque in a state where an example of a control (coast downshift) is performed;
Fig. 4 is a time chart showing the rotary speed, the shift stroke and the torque in a state where a control (coast downshift) is performed by the drive system for the vehicle according to the embodiment;
Fig. 5 is a time chart showing the rotary speed, the shift stroke and the torque in a state where an example of a control (upshifting of a gear stage while an accelerator is in an off state) is performed; and
Fig. 6 is a time chart showing the rotary speed, the shift stroke and the torque in a state where a control (upshifting of the gear stage while the accelerator is in the off state) is performed by the drive system for the vehicle according to the embodiment.

### DETAILED DESCRIPTION

A drive system for a vehicle of an embodiment will be explained with reference to the drawings.

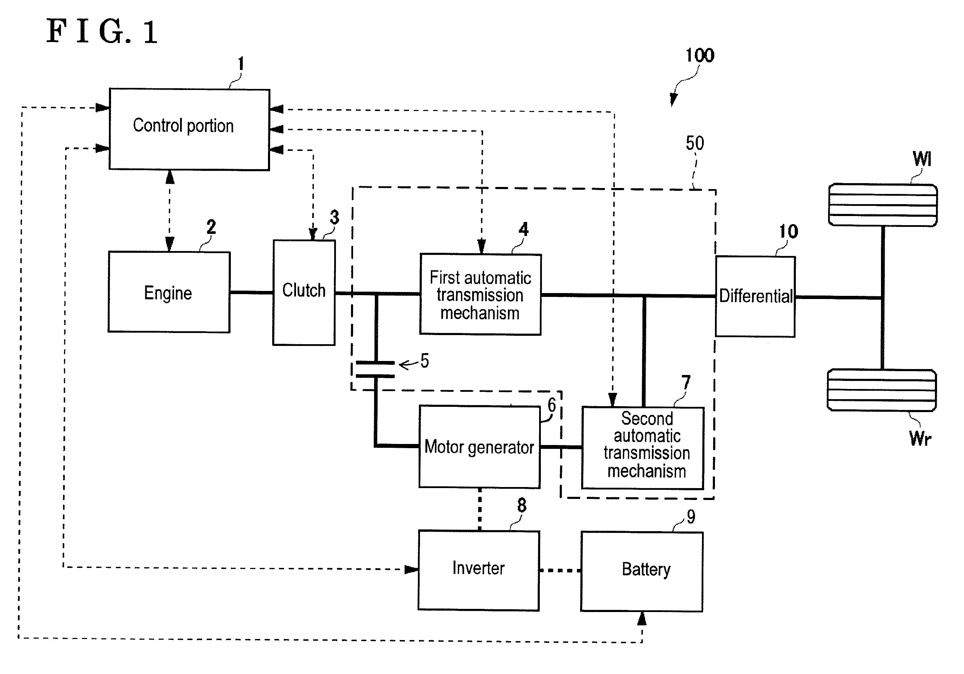

As shown in Fig. 1, a drive system 100 for a vehicle includes a control portion 1 (i.e., serving as a control device), an engine 2 (i.e., serving as a driving source), a clutch 3, a first automatic transmission mechanism 4 (i.e., an automated transmission mechanism serving as a transmission), a connection mechanism 5 (e.g., an automated transmission mechanism serving as a transmission), a motor generator 6, a second automatic transmission mechanism 7 (e.g., serving as a transmission), an inverter 8, a battery 9 and a differential 10. The control portion 1 is electrically connected to the engine 2, the clutch 3, the first automatic transmission mechanism 4, the second automatic transmission mechanism 7, the inverter 8 and the battery 9 and inputs/outputs signals to/from the engine 2, the clutch 3, the first automatic transmission mechanism 4, the second automatic transmission mechanism 7, the inverter 8 and the battery 9 for control. The control portion 1 can be configured as a mutual communication portion of, for example, an electric control unit or an ECU and a controller area network or a CAN for each controlling target. Alternatively, the control portion 1 can be configured with a single ECU.

The engine 2 corresponds to an internal combustion engine which applies a hydrocarbon fuel of, for example, gasoline or diesel, as a driving source. In particular, the engine 2 corresponds to, for example, a gasoline engine or a diesel engine. The engine 2 generates and outputs a rotational torque. The clutch 3 engages/disengages an output shaft of the engine 2 with/from an input shaft of the first automatic transmission mechanism 4. The first automatic transmission mechanism 4 changes a rotary speed (i.e., revolutional speed) of the engine 2 transmitted via the clutch 3 or changes a rotary speed (i.e., revolutional speed) of the motor generator 6 transmitted via the connection mechanism 5. Then, the first automatic transmission mechanism 4 outputs the respective rotations of the engine 2 and the motor generator 6 from the output shaft and transmits the rotations to the differential 10. The connection mechanism 5 connects the first automatic transmission mechanism 4 and the motor generator 6 to transmit the output of the motor generator 6 to the input shaft of the first automatic transmission mechanism 4. The connection mechanism 5 disconnects the first automatic transmission mechanism 4 from the motor generator 6 to disconnect the output of the motor generator 6 from the input shaft of the first automatic transmission mechanism 4.

The second automatic transmission mechanism 7 changes the rotary speed of the motor generator 6 inputted from an input shaft of the second automatic transmission mechanism 7 and outputs the rotation from an output shaft of the second automatic transmission mechanism 7 to transmit the rotation to the differential 10. The second automatic transmission mechanism 7 includes a gear train which has at least two gear stages. The second automatic transmission mechanism 7 securely disconnects the motor generator 6 from an input shaft of the differential 10.

The battery 9 corresponds to a secondary battery or a rechargeable battery which is connected to the inverter 8 to store a direct current converted by the inverter 8 while supplying the direct current to the inverter 8. The inverter 8 is electrically connected to the motor generator 6 and the battery 9 to convert an alternating-current power generated by the motor generator 6 serving as an electricity generator to the direct current while lowering a voltage of the direct-current power to output the direct-current power to the battery 9. In addition, the inverter 8 raises the voltage of the direct-current power supplied by the battery 9 and converts the direct-current power to the alternating-current power to supply the alternating-current power to the motor generator 6 serving as a motor. The motor generator 6 generates the rotational torque by the application of the electric power supplied by the inverter 8 while converting the rotational torque to the alternating current and supplying the alternating current to the inverter 8.

The differential 10 delivers the rotary speed which is changed at each of the first automatic transmission mechanism 4 and the second automatic transmission mechanism 7 to right-and-left driving wheels Wr, WI. The rotational torque transmitted from the driving wheels Wr, WI is transmitted to the respective output shafts of the first automatic transmission mechanism 4 and the second automatic transmission mechanism 7 via the differential 10.

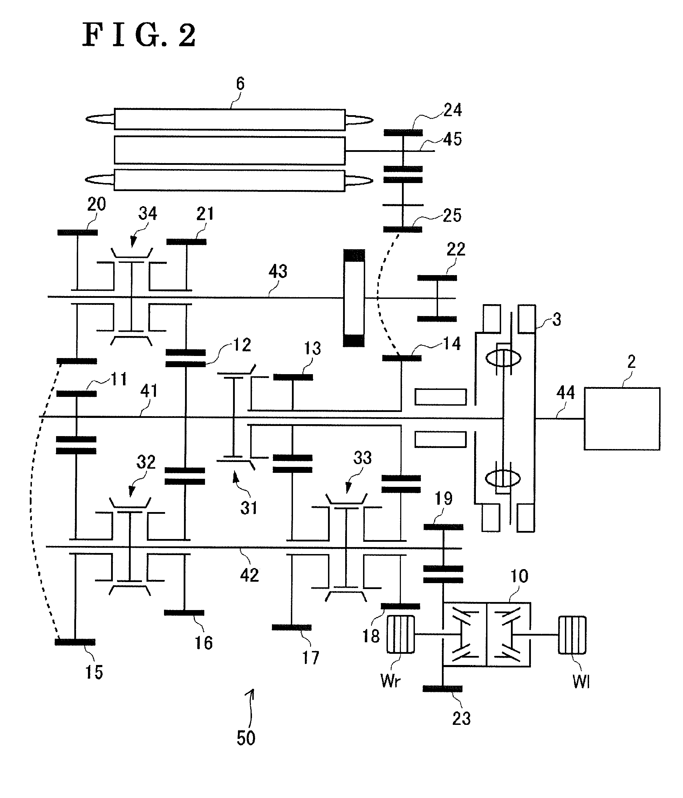

A gear train of the drive system 100 for the vehicle of the embodiment is not limited to the gear train shown in Fig. 2 as long as a motor generator for assisting a power and for performing the regeneration is selectively connectable and rotationally connectable to the output shaft which is rotationally connected to the driving wheels.

In Fig. 2, the same components as those described in Fig. 1 are marked with the same reference numerals. A transmission 50 in Fig. 2 corresponds to a combined portion of the first automatic transmission mechanism 4, the connection mechanism 5 and the second automatic transmission mechanism 7 shown in Fig. 1.

The rotational torque outputted from the engine 2 is transmitted to a driving shaft 44. The clutch 3 is provided at a position between the driving shaft 44 and an input shaft 41 of the transmission 50 to engage/disengage the driving shaft 44 with/from the input shaft 41. The clutch 3 corresponds to any type of clutches as long as the clutch electrically controls torque transmitted between the driving shaft 44 and the input shaft 41. The transmitted torque is controlled by the control portion 1 shown in Fig. 1.

The transmission 50 corresponds to a gear mechanism-type automatic transmission that changes the rotary speed of the rotational torque transmitted from the engine 2 by gear ratios of multiple gear stages. The transmission 50 outputs the rotational torque to the differential 10. The transmission 50 of the embodiment corresponds to a dog clutch-type automatic transmission which includes first, second, third and fourth dog clutches 31, 32, 33, 34. Alternatively, the transmission 50 corresponds to an automatic transmission which includes a synchronization mechanism of, for example, synchronizer rings. The transmission 50 includes an input shaft 41, a first output shaft 42 and a second output shaft 43 which are disposed in parallel with one another. The input shaft 41 is coaxial with the driving shaft 44.

The transmission 50 includes a first gear 11, a second gear 12, a third gear 13, a fourth gear 14 and the first dog clutch 31 which are positioned about the input shaft 41. The transmission 50 includes a fifth gear 15, a sixth gear 16, a seventh gear 17, an eighth gear 18, a ninth gear 19, the second dog clutch 32 and the third dog clutch 33 which are positioned about the first output shaft 42. The transmission 50 includes a tenth gear 20, an eleventh gear 21, a twelfth gear 22 and the fourth dog clutch 34 which are positioned about the second output shaft 43. Each of the first, second, third and fourth dog clutches 31, 32, 33, 34 is driven by an actuator and is connected to and disconnected from a gear which is positioned next to the first, second, third and fourth dog clutches 31, 32, 33, 34. The connection mechanism 5 corresponds to the first dog clutch 31.

The first gear 11 and the second gear 12 correspond to fixed gears which are fixed to the input shaft 41 in a relatively unrotatable manner and which integrally rotate with the input shaft 41. The diameter of the first gear 11 is smaller than the diameter of the second gear 12. The third gear 13 and the fourth gear 14 integrally rotate with each other and correspond to idle gears which are relatively rotatable (or idly rotatable) with the input shaft 41. The diameter of the third gear 13 is smaller than the diameter of the fourth gear 14. The first dog clutch 31 connects/disconnects a set of the third gear 13 and the fourth gear 14 which integrally rotate with each other with/from the input shaft 41. When the first dog clutch 31 connects the set of the third gear 13 and the fourth gear 14 with the input shaft 41, the set of the third gear 13 and the fourth gear 14 integrally rotates with the input shaft 41.

The fifth gear 15, the sixth gear 16, the seventh gear 17 and the eighth gear 18 correspond to idle gears which are relatively rotatable (or idly rotatable) with the first output shaft 42. The fifth gear 15, the sixth gear 16, the seventh gear 17 and the eighth gear 18 are meshed with and rotationally connected to the first gear 11, the second gear 12, the third gear 13 and the fourth gear 14, respectively. The fifth gear 15 and the sixth gear 16 are positioned in line with each other and sandwich the second dog clutch 32 therebetween. The diameter of the fifth gear 15 is larger than the diameter of the sixth gear 16. The seventh gear 17 and the eighth gear 18 are positioned in line with each other and sandwich the third dog clutch 33 therebetween. The diameter of the seventh gear 17 is larger than the diameter of the eighth gear 18.

The second dog clutch 32 is disposed at a position between the fifth gear 15 and the sixth gear 16 and is provided for being connected to one of the fifth gear 15 and the sixth gear 16. The second dog clutch 32 is connected to the fifth gear 15 so that the fifth gear 15 integrally rotates with the first output shaft 42. The second dog clutch 32 is connected to the sixth gear 16 so that the sixth gear 16 integrally rotates with the first output shaft 42. In a state where the second dog clutch 32 connects with neither the fifth gear 15 nor the sixth gear 16, that is, the second dog clutch 32 is in a neutral state, each of the fifth gear 15 and the sixth gear 16 idly rotates with respect to the first output shaft 42.

The third dog clutch 33 is connected to the seventh gear 17 so that the seventh gear 17 integrally rotates with the first output shaft 42. The third dog clutch 33 is connected to the eighth gear 18 so that the eighth gear 18 integrally rotates with the first output shaft 42. In a state where the third dog clutch 33 connects with neither the seventh gear 17 nor the eighth gear 18, that is, the third dog clutch 33 is in the neutral state, each of the seventh gear 17 and the eighth gear 18 idly rotates with respect to the first output shaft 42.

The ninth gear 19 corresponds to a fixed gear which is fixed to the first output shaft 42 in the relatively unrotatable manner and which integrally rotates with the first output shaft 42. The ninth gear 19 is meshed with and rotationally connected to a differential gear 23.

The tenth gear 20 and the eleventh gear 21 correspond to idle gears which are relatively rotatable (or idly rotatable) with the second output shaft 43. The tenth gear 20 and the eleventh gear 21 are meshed with and rotationally connected to the fifth gear 15 and the second gear 12, respectively. The tenth gear 20 and the eleventh gear 21 are positioned in line with each other and sandwich the fourth dog clutch 34 therebetween.

The fourth dog clutch 34 is disposed at a position between the tenth gear 20 and the eleventh gear 21 and is provided for being connected to one of the tenth gear 20 and the eleventh gear 21. The fourth dog clutch 34 is connected to the tenth gear 20 so that the tenth gear 20 integrally rotates with the second output shaft 43. The fourth dog clutch 34 is connected to the eleventh gear 21 so that the eleventh gear 21 integrally rotates with the second output shaft 43. In a state where the fourth dog clutch 34 connects with neither the tenth gear 20 nor the eleventh gear 21, that is, the fourth dog clutch 34 is in the neutral state, each of the tenth gear 20 and the eleventh gear 21 idly rotates with respect to the second output shaft 43.

The twelfth gear 22 corresponds to a fixed gear which is fixed to the second output shaft 43 in the relatively unrotatable manner. The twelfth gear 22 integrally rotates with the second output shaft 43. The twelfth gear 22 is meshed with and rotationally connected to the differential gear 23.

A motor gear 24 is fixed to a motor output shaft 45 of the motor generator 6 and is meshed with and rotationally connected to a reduction gear 25. The reduction gear 25 is meshed with and rotationally connected to the fourth gear 14.

According to the construction of the aforementioned gear train, the connection and disconnection of each of the first, second, third, and fourth dog clutches 31, 32, 33, 34 are controlled by the control portion 1 (see Fig. 1) which controls the actuator corresponding to each of the first, second, third, and fourth dog clutches 31, 32, 33, 34 to activate each of the first, second, third, and fourth dog clutches 31, 32, 33, 34. In particular, in a case where the transmission 50 establishes a first gear stage, the second dog clutch 32 is connected to the fifth gear 15, the third dog clutch 33 is connected to the seventh gear 17 and the first and fourth dog clutches 31, 34 maintain in the neutral states. Accordingly, the rotational torque transmitted from the engine 2 is transmitted in the order of the drive shaft 44, the input shaft 41, the first gear 11, the fifth gear 15, and the first output shaft 42. Specifically, the drive shaft 44 is connected to the input shaft 41 via the clutch 3. The input shaft 41 integrally rotates with the first gear 11. The first gear 11 is rotationally connected to the fifth gear 15. The fifth gear 15 integrally rotates with the first output shaft 42 by the connection with the second dog clutch 32. Accordingly, the rotational torque transmitted from the engine 2 is outputted to the differential gear 23. Regarding the rotational torque transmitted from the motor generator 6, the rotational torque transmitted from the motor generator 6 is transmitted in the order of the motor gear 24, the fourth gear 14, the third gear 13, the seventh gear 17 and the first output shaft 42. Specifically, the motor gear 24 is rotationally connected to the fourth gear 14 via the reduction gear 25. The fourth gear 14 integrally rotates with the third gear 13. The third gear 13 is rotationally connected to the seventh gear 17. The seventh gear 17 integrally rotates with the first output shaft 42 by the connection with the third dog clutch 33. Accordingly, the rotational torque transmitted from the motor generator 6 is outputted to the differential gear 23.

In a case where the transmission 50 establishes a second gear stage, the first dog clutch 31 is connected to the third and fourth gears 13, 14, the third dog clutch 33 is connected to the seventh gear 17 and the second and fourth dog clutches 32, 34 maintain in the neutral states. Accordingly, the rotational torque transmitted from the engine 2 is transmitted in the order of the drive shaft 44, the input shaft 41, the third gear 13, the seventh gear 17, and the first output shaft 42. Specifically, the drive shaft 44 is connected to the input shaft 41 via the clutch 3. The input shaft 41 integrally rotates with the third gear 13 by the connection of the first dog clutch 31 and the third gear 13. The third gear 13 is rotationally connected to the seventh gear 17. The seventh gear 17 integrally rotates with the first output shaft 42 by the connection with the third dog clutch 33. Accordingly, the rotational torque transmitted from the engine 2 is outputted to the differential gear 23. Regarding the rotational torque transmitted from the motor generator 6, the rotational torque transmitted from the motor generator 6 is transmitted in the order of the motor gear 24, the fourth gear 14, the third gear 13, the seventh gear 17 and the first output shaft 42. Specifically, the motor gear 24 is rotationally connected to the fourth gear 14 via the reduction gear 25. The fourth gear 14 integrally rotates with the third gear 13. The third gear 13 is rotationally connected to the seventh gear 17. The seventh gear 17 integrally rotates with the first output shaft 42 by the connection with the third dog clutch 33. Accordingly, the rotational torque transmitted from the motor generator 6 is outputted to the differential gear 23.

In a case where the transmission 50 establishes a third gear stage, the fourth dog clutch 34 is connected to the eleventh gear 11, and the third dog clutch 33 is connected to either the seventh gear 17 or the eighth gear 18. Hereinafter, a gear stage established by the connection of the third dog clutch 33 and the seventh gear 17 is referred to as a 3-1 gear stage. A gear stage established by the connection of the third dog clutch 33 and the eighth gear 18 is referred to as a 3-2 gear stage. Accordingly, the rotational torque transmitted from the engine 2 is transmitted in the order of the drive shaft 44, the input shaft 41, the second gear 12, the eleventh gear 11, and the second output shaft 43. Specifically, the drive shaft 44 is connected to the input shaft 41 via the clutch 3. The input shaft 41 integrally rotates with the second gear 12. The second gear 12 is rotationally connected to the eleventh gear 21. The eleventh gear 21 integrally rotates with the second output shaft 43 by the connection with the fourth dog clutch 34. Accordingly, the rotational torque transmitted from the engine 2 is outputted to the differential gear 23. In a state where the 3-1 gear stage is established, the rotational torque transmitted from the motor generator 6 is transmitted in the order of the motor gear 24, the fourth gear 14, the third gear 13, the seventh gear 17 and the first output shaft 42. Specifically, the motor gear 24 is rotationally connected to the fourth gear 14 via the reduction gear 25. The fourth gear 14 integrally rotates with the third gear 13. The third gear 13 is rotationally connected to the seventh gear 17. The seventh gear 17 integrally rotates with the first output shaft 42 by the connection with the third dog clutch 33. Accordingly, the rotational torque transmitted from the motor generator 6 is outputted to the differential gear 23. In a state where the 3-2 gear stage is established, the rotational torque transmitted from the motor generator 6 is transmitted in the order of the motor gear 24, the fourth gear 14, the eighth gear 18 and the first output shaft 42. Specifically, the motor gear 24 is rotationally connected to the fourth gear 14 via the reduction gear 25. The fourth gear 14 is rotationally connected to the eighth gear 18. The eighth gear 18 integrally rotates with the first output shaft 42 by the connection with the third dog clutch 33. Accordingly, the rotational torque transmitted from the motor generator 6 is outputted to the differential gear 23.

In a case where the transmission 50 establishes a fourth gear stage, the first dog clutch 31 is connected to the third gear 13 and the fourth gear 14, the third dog clutch 33 is connected to the eighth gear 18 and the second and fourth dog clutches 32, 34 maintain in the neutral states. Accordingly, the rotational torque transmitted from the engine 2 is transmitted in the order of the drive shaft 44, the input shaft 41, the fourth gear 14, the eighth gear 18 and the first output shaft 42. Specifically, the drive shaft 44 is connected to the input shaft 41 via the clutch 3. The input shaft 41 integrally rotates with the fourth gear 14 by the connection of the first dog clutch 31 and the fourth gear 14. The fourth gear 14 is rotationally connected to the eighth gear 18. The eighth gear 18 integrally rotates with the first output shaft 42 by the connection with the third dog clutch 33. Accordingly, the rotational torque transmitted from the engine 2 is outputted to the differential gear 23. Regarding the rotational torque transmitted from the motor generator 6, the rotational torque transmitted from the motor generator 6 is transmitted in the order of the motor gear 24, the fourth gear 14, the eighth gear 18 and the first output shaft 42. Specifically, the motor gear 24 is rotationally connected to the fourth gear 14 via the reduction gear 25. The fourth gear 14 is rotationally connected to the eighth gear 18. The eighth gear 18 integrally rotates with the first output shaft 42 by the connection with the third dog clutch 33. Accordingly, the rotational torque transmitted from the motor generator 6 is outputted to the differential gear 23.

In a case where the transmission 50 establishes a fifth gear stage, the second dog clutch 32 is connected to the sixth gear 16, the third dog clutch 33 is connected to the eighth gear 18 and the first and fourth dog clutches 31, 34 maintain in the neutral states. Accordingly, the rotational torque transmitted from the engine 2 is transmitted in the order of the drive shaft 44, the input shaft 41, the second gear 12, the sixth gear 16 and the first output shaft 42. Specifically, the drive shaft 44 is connected to the input shaft 41 via the clutch 3. The input shaft 41 integrally rotates with the second gear 12. The second gear 12 is rotationally connected to the sixth gear 16. The sixth gear 16 integrally rotates with the first output shaft 42 by the connection with the second dog clutch 32. Accordingly, the rotational torque transmitted from the engine 2 is outputted to the differential gear 23. Regarding the rotational torque transmitted from the motor generator 6, the rotational torque transmitted from the motor generator 6 is transmitted in the order of the motor gear 24, the fourth gear 14, the eighth gear 18 and the first output shaft 42. Specifically, the motor gear 24 is rotationally connected to the fourth gear 14 via the reduction gear 25. The fourth gear 14 is rotationally connected to the eighth gear 18. The eighth gear 18 integrally rotates with the first output shaft 42 by the connection with the third dog clutch 33. Accordingly, the rotational torque transmitted from the motor generator 6 is outputted to the differential gear 23.

In a case where the transmission 50 establishes a reverse gear stage, the fourth dog clutch 34 is connected to the tenth gear 20 and the first, second and third dog clutches 31, 32, 33 maintain in the neutral states. Accordingly, the rotational torque transmitted from the engine 2 is transmitted in the order of the drive shaft 44, the input shaft 41, the first gear 11, the fifth gear 15, the tenth gear 20 and the second output shaft 43. Specifically, the drive shaft 44 is connected to the input shaft 41 via the clutch 3. The input shaft 41 integrally rotates with the first gear 11. The first gear 11 is rotationally connected to the fifth gear 15. The fifth gear 15 is rotationally connected to the tenth gear 20. The tenth gear 20 integrally rotates with the second output shaft 43 by the connection with the fourth dog clutch 34. Accordingly, the rotational torque transmitted from the engine 2 is outputted to the differential gear 23. The differential gear 23 rotates in a reverse direction of the rotary directions of the aforementioned gears which establish the first, second, third, fourth and fifth gear stages.

Next, the automatic transmission control of the embodiment will be explained. In a case where the accelerator is in an off state and a request for acceleration is not inputted, that is, in a case where the engine 2 does not generate the rotational torque, the control portion 1 of the drive system 100 for the vehicle of the embodiment controls the actuator corresponding to each of the first, second, third and fourth dog clutches 31, 32, 33, 34 to prevent a torque loss caused by the gearshift when the clutch 3 is disengaged and the motor generator 6 performs the regeneration.

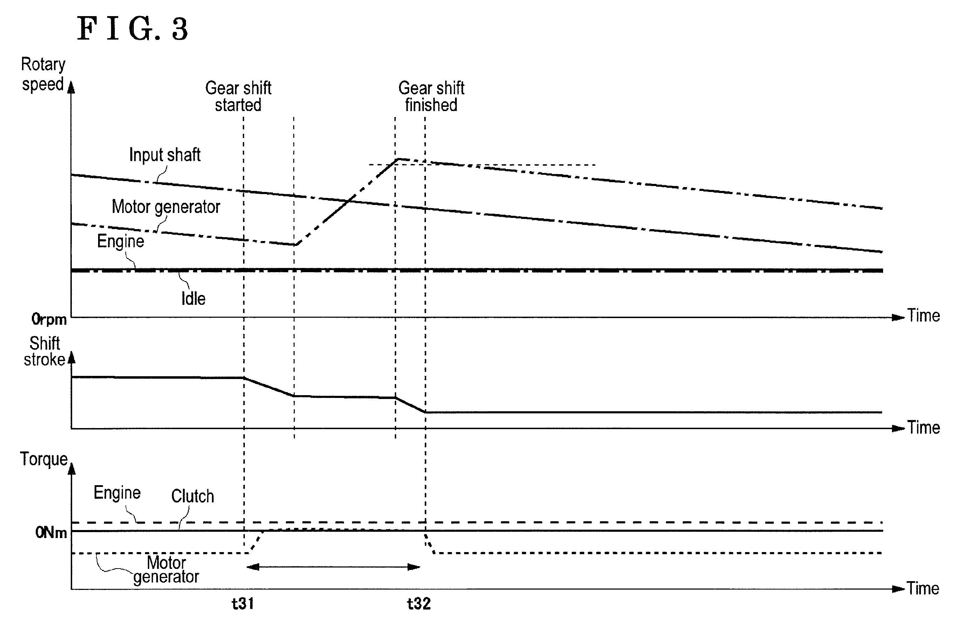

The torque loss caused by a coast downshift and the control for preventing the torque loss will be explained with reference to Fig. 3. Fig. 3 shows an example of the coast downshift which is performed when the vehicle speed is decreased by the turning off of the accelerator according to an example of a control. During the coasting, an operator holds the accelerator in the off state, so that each of an engine speed and an idle speed maintains a constant value.

During the coasting, the clutch 3 is disengaged in order to recover a state of charge (SOC) of the battery 9. Then, as shown in Fig. 3, the rotational torque of the first and second output shafts 42, 43 which corresponds to a required engine torque (engine brake) is outputted to the motor generator 6 as a negative torque. Accordingly, the regenerative braking is performed. That is, the motor generator 6 receives the rotational torque which is transmitted from the driving wheels Wr, WI to the first and second output shafts 42, 43 via the differential 10. Thus, the motor generator 6 generates the electricity and the rotary speed of the driving wheels Wr, WI decreases.

In each process of the coast downshifts from the fourth gear stage to the third gear stage and from the third gear stage to the second gear stage, the gear is shifted from the 3-2 gear stage to the 3-1 gear stage. That is, the third dog clutch 33 is disconnected from the eighth gear 18 and comes to be connected to the seventh gear 17 through the neutral state.

In order to shift the gear from the 3-2 gear stage to the 3-1 gear stage, the control portion 1 controls the actuator of the third dog clutch 33, which is connected to the eighth gear 18 to establish the 3-2 gear stage, to start shifting the gear stage at a time t31. Thus, the connection between the third dog clutch 33 and the eighth gear 18 is released. Accordingly, as shown in Fig. 3, the negative the rotational torque applied to the motor generator 6 comes to be zero during the time from the time t31 to a time t32 when the 3-1 gear stage is established, that is, during the time when the connection of the third dog clutch 33 and the seventh gear 17 is completed. Thus, the braking is not performed during the time. An operator may feel an idle running feeling even at the coast downshift due to the torque loss of the negative torque.

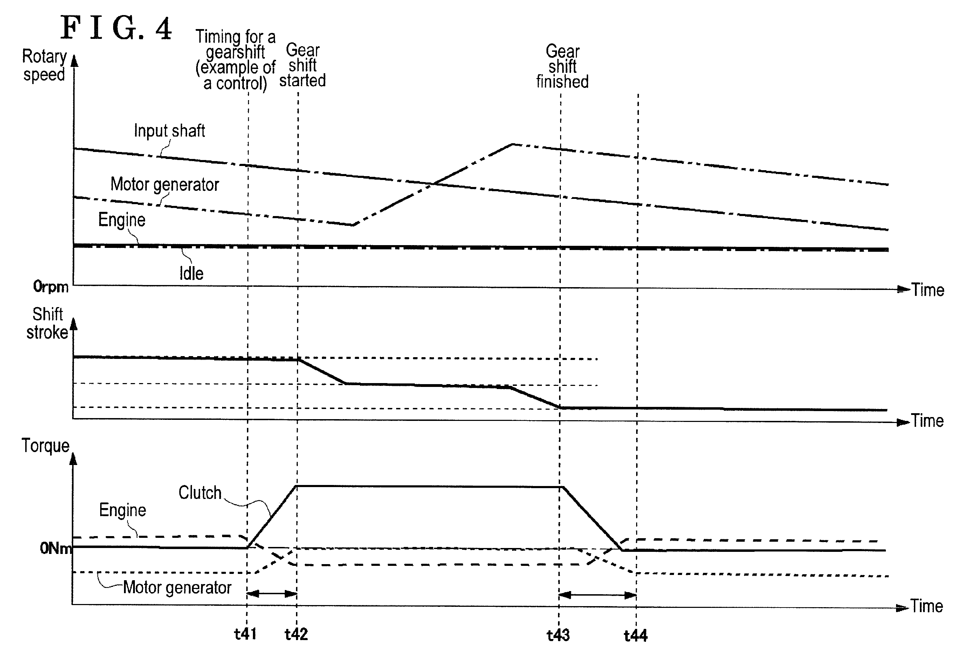

As shown in Fig. 4, according to the embodiment, when the coast downshift is performed, the clutch 3 is engaged so that the engine 2 outputs the negative torque caused by an engine friction. The regeneration is not performed during the coast downshift from the 3-2 gear stage to the 3-1 gear stage, however, the braking is performed. That is, in a case where the motor generator 6 cannot receive the rotational torque transmitted from the driving wheels Wr, WI temporarily because the gear stage is shifted during the coast downshift, the engine 2 can receive the rotational torque transmitted from the driving wheels Wr, WI by the engagement of the clutch 3.

Specifically, as shown in Fig. 4, the rotary speed of the motor generator 6 decreases because the accelerator is turned off. Then, in a state where the rotary speed of the motor generator 6 is decreased and at a time t41, prior to a timing for a gearshift (when the gearshift is requested by the automatic control), that is, prior to the activation of the actuator of the third dog clutch 33 for shifting from the 3-2 gear stage to the 3-1 gear stage shown in Fig. 4, the clutch 3 is engaged gradually, that is, the clutch torque is gradually increased by engaging of the clutch 3. Then, the rotational torque transmitted from the driving wheels Wr, WI to be outputted to the engine 2 increases. The rotational torque (negative torque) transmitted from driving wheels Wr, WI to be inputted to the motor generator 6 decreases in accordance with the increase of the rotational torque which is transmitted from the driving wheels Wr, WI and is outputted to the engine 2. The clutch 3 generates the clutch torque at the maximum level and is completely engaged. Then, at a time t42 when the rotational torque (negative torque) transmitted from the driving wheels Wr, WI to be outputted to the engine 2 comes to be at the maximum level while the rotational torque (negative torque) which is transmitted from the driving wheels Wr, WI and is received at the motor generator 6 comes to be zero, the control portion 1 controls the actuator of the third dog clutch 33 to be activated.

At a time t43 when the gearshift from the 3-2 gear stage to the 3-1 gear stage is completed, the control portion 1 controls the clutch 3 to be gradually disengaged so that the clutch torque is gradually decreased, thereby rotational torque transmitted from the driving wheels Wr, WI to be outputted to the engine 2 decreases. Accordingly, the motor generator 6 can perform the regenerative braking. Thus, the rotational torque transmitted from the driving wheels Wr, WI to be inputted to the motor generator 6 increases in accordance with the decrease of the rotational torque which is transmitted from the driving wheels Wr, WI and is outputted to the engine 2. When the clutch 3 is disengaged, the motor generator 6 sorely receives the rotational torque transmitted from the driving wheels Wr, WI at a time t44. Thus, the regenerative braking is restarted.

That is, the destination of the rotational torque transmitted from the driving wheels Wr, WI is gradually shifted from the motor generator 6 to the engine 2 during the time between the time t41 and the time t42. The whole the rotational torque is inputted to the engine 2 during the time between the time t42 and the time t43. Then, the destination of the rotational torque is shifted from the engine 2 to the motor generator 6 during the time between the time t43 and the time t44. Before the time t41 and after the time t44 when the third dog clutch 33 is completely engaged with one of the seventh gear 17 and the eighth gear 18 is referred to as a first state. A time between the time t42 and the time t43 when the input amount of the rotational torque transmitted from the driving wheels Wr, WI to the motor generator 6 comes to be zero is referred to a second state.

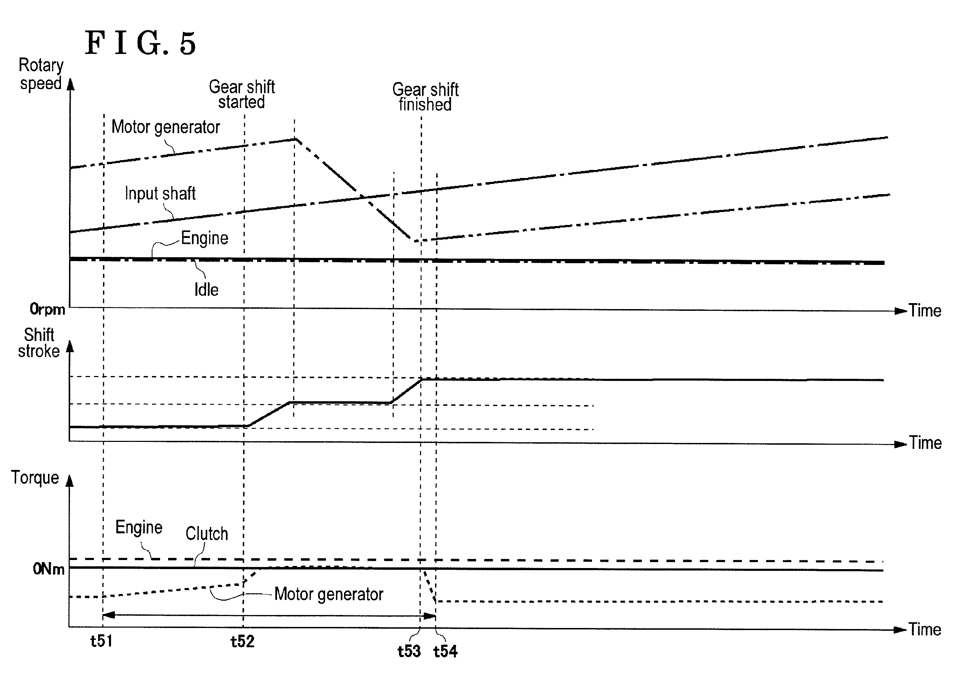

Next, the torque loss caused by the upshifting of the gear while the acceleration is in the off state and the control for preventing the torque loss caused by the upshifting of the gear while the accelerator is in the off state will be explained with reference to Fig. 5. Fig. 5 shows an example of the upshifting of the gear while the accelerator is in the off state which is performed when the vehicle speed increases even in a state where the accelerator is in the off state, for example, when the vehicle descends a long downward slope while the accelerator is in the off state according to an example of a control. At this time, as shown in Fig. 5, each of the engine speed and the idle speed corresponds to a constant value because an operator maintains the accelerator in the off state.

In those circumstances, the clutch 3 is disengaged in order to recover the state of charge (SOC) of the battery 9. Then, as shown in Fig. 5, the rotational torque of the first and second output shafts 42, 43 which corresponds to the required engine torque (engine brake) is outputted to the motor generator 6 as the negative torque. Accordingly, the regenerative braking is performed. That is, the motor generator 6 receives the rotational torque transmitted from the driving wheels Wr, WI to the first and second output shafts 42, 43 via the differential 10 so that the motor generator 6 generates the electricity.

As described above, the rotational torque transmitted from the driving wheels Wr, WI is outputted to the motor generator 6 so that a braking power is applied to the driving wheels Wr, WI. However, when the vehicle descends the long downward slope, as shown in Fig. 5, the rotary speed of the diving wheels Wr, WI increases because of an inertia or a gravity despite the braking power. Thus, the rotary speed of the motor generator 6 may increase in accordance with the increase of the rotary speed of the driving wheels Wr, WI. When the rotary speed of the motor generator 6 increases up to the upper limit and torque of the motor generator 6 increases in accordance with the rotary speed of the motor generator 6 from a time t51, the motor generator 6 cannot receive the rotational torque transmitted from the driving wheels Wr, WI any further (at a time t52). In such cases, the rotary speed of the motor generator 6 is required to decrease by the upshifting of the gear from the 3-1 gear stage to the 3-2 gear stage (the upshifting of the gear while the accelerator is in the off state). As shown in Fig. 5, the rotary speed of the motor generator 6 can decrease by the upshifting of the gear while the accelerator is in the off state.

In order to shift the gear from the 3-1 gear stage to the 3-2 gear stage, the control portion 1 controls the actuator of the third dog clutch 33, which is connected to the seventh gear 17 to establish the 3-2 gear stage at a time t52, to activate the gearshift. Thus, the connection between the third dog clutch 33 with the seventh gear 17 is released. Accordingly, as shown in Fig. 5, the negative the rotational torque applied to the motor generator 6 comes to be zero upto a time t53 when the 3-2 gear stage is established, that is, when the connection of the third dog clutch 33 and the eighth gear 18 is completed. Thus, the braking is not performed during the time. When the third dog clutch 33 is completely connected to the eighth gear 18, the motor generator 6 comes to receive the whole rotational torque transmitted from the driving wheels Wr, WI at a time t54. Accordingly, an operator may feel the idle running feeling even when the accelerator is in the off state due to the torque loss of the negative torque.

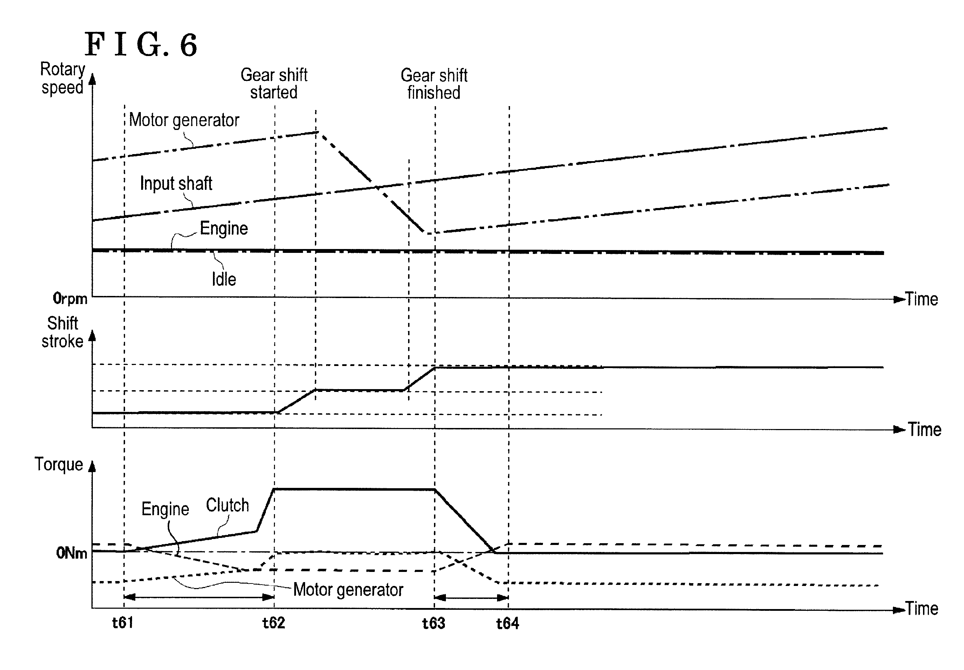

As shown in Fig. 6, according to the embodiment, when the upshifting is performed while the accelerator is in the off state, the clutch 3 is connected so that the negative torque is outputted to the engine 2. The regenerative braking is not operated by the motor generator 6 when the upshifting of the gear from the 3-1 gear stage to the 3-2 gear stage is performed while the accelerator is in the off state. However, the engine 2 absorbs the rotational torque transmitted from the driving wheels Wr, WI sufficiently and applies the braking power to the driving wheels Wr, WI to prevent the increase of the rotary speed of the driving wheels Wr, WI. That is, in a case where the motor generator 6 cannot receive the rotational torque transmitted from the driving wheels Wr, WI temporarily because the gear is upshifted while the accelerator is in the off state, the engine 2 can receive the rotational torque transmitted from the driving wheels Wr, WI by the engagement of the clutch 3.

Specifically, as shown in Fig. 6, the rotary speed of the motor generator 6 increases even in a case where the accelerator is turned off and each of the engine speed and the idle speed corresponds to zero. Then, in a state where the rotary speed of the motor generator 6 is increased and at a time t61, prior to a timing for the gearshift, that is, prior to the activation of the actuator of the third dog clutch 33 for shifting from the 3-1 gear stage to the 3-2 gear stage shown in Fig. 6, the clutch is engaged gradually to increase to increase the clutch torque gradually. Then, the rotational torque transmitted from the driving wheels Wr, WI to be outputted to the engine 2 increases. The rotational torque received at the motor generator 6 decreases in accordance with the increase of the rotational torque which is transmitted from the driving wheels Wr, WI and is outputted to the engine 2. The clutch 3 is completely engaged and generates the clutch torque at the maximum level. Then, at a time t62 when the rotational torque outputted to the engine 2 comes to be at the maximum level while the rotational torque received at the motor generator 6 comes to be zero, the control portion 1 controls the actuator of the third dog clutch 33 to be activated.

At a time t63 when the gearshift from the 3-1 gear stage to the 3-2 gear stage is completed, the control portion 1 controls the clutch 3 to be gradually disengaged to decrease the clutch torque gradually so that the rotational torque transmitted from the driving wheels Wr, WI to be outputted to the engine 2 decreases. Accordingly, the motor generator 6 can perform the regenerative braking. Thus, the rotational torque received at the motor generator 6 increases in accordance with the decrease of the rotational torque which is transmitted from the driving wheels Wr, WI and is outputted to the engine 2. When the clutch 3 is disengaged, the motor generator 6 sorely receives the rotational torque transmitted from the driving wheels Wr, WI at a time t64. Thus, the regenerative braking is restarted.

That is, the destination of the rotational torque transmitted from the driving wheels Wr, WI is gradually shifted from the motor generator 6 to the engine 2 during the time between the time t61 and the time t62. The whole rotational torque is inputted to the engine 2 during the time between the time t62 and the time t63. Then, the destination of the rotational torque is shifted from the engine 2 to the motor generator 6 during the time between the time t63 and the time t64. Before the time t61 and after the time t64 when the third dog clutch 33 is completely engaged with one of the seventh gear 17 and the eighth gear 18 is referred to as the first state. A time between the time t62 and the time t63 when the input amount of the rotational torque transmitted from the driving wheels Wr, WI to the motor generator 6 comes to be zero is referred to as the second state.

As described above, according to the drive system 100 for the vehicle of the embodiment, when the coast downshift is performed, the clutch 3 is connected so that the engine 2 outputs the negative torque caused by an engine friction. According to the drive system 100 for the vehicle, in a case where the motor generator 6 cannot receive the rotational torque transmitted from the driving wheels Wr, WI temporarily, the engine 2 can receive the rotational torque transmitted from the driving wheels Wr, WI by the engagement of the clutch 3. According to the drive system 100 for the vehicle, the clutch 3 is gradually engaged to increase the clutch torque gradually so that the rotational torque transmitted from the driving wheels Wr, WI to be outputted to the engine 2 increases.

According to the drive system 100 for the vehicle of the embodiment, when the coast downshift is performed, or when the upshifting of the gear while the accelerator is in the off state is performed, the clutch 3 is engaged so that the negative torque is outputted to the engine 2. Accordingly, the torque loss can be prevented by the performance of the braking by the engine brake.

The driving source is not limited to the engine 2 and can be a motor or a motor generator. According to the aforementioned embodiment, the single motor generator 6 is provided. Alternatively, the drive system 100 for the vehicle can include plural motor generators.

The shift timing of the rotational torque transmitted from the driving wheels Wr, WI and is shifted from the motor generator 6 to the engine 2 is not limited to the timing shown in Figs. 4 and 6. Alternatively, the rotational torque transmitted from the driving wheels Wr, WI can be shifted from the motor generator 6 to the engine 2 as long as at least a part of the rotational torque inputted to the motor generator 6 by then is inputted to the engine 2 when the rotational torque transmitted from the driving wheels Wr, WI to the motor generator 6 corresponds to zero.

According to the aforementioned embodiment, the rotational torque of the output shaft is inputted to the engine 2 (driving source) in a case where the motor generator 6 cannot perform the regenerative braking effectively. Accordingly, the torque loss can be either decreased or prevented. Thus, the deterioration of the drivability can be prevented, so that the drive system for the vehicle of the embodiment is effective as a drive system for a vehicle which performs the regenerative braking by a motor generator.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A drive system (100) for a vehicle, comprising:
a driving source (2) generating a rotational torque;
a motor generator (6) generating the rotational torque by an application of electric power, the motor generator (6) generating electricity by receiving the rotational torque of an output shaft (42, 43) rotationally connected to a driving wheel (Wr, WI);
a transmission (50) selectively connecting and rotationally connecting at least one of the driving source (2) and the motor generator (6) to the output shaft (42, 43);
a clutch (3) connecting the driving source (2) to the transmission (50) and disconnecting the driving source (2) from the transmission (50); and
a control device (1) controlling the transmission (50) to receive the rotational torque of the output shaft (42, 43) transmitted from the driving wheel (Wr, WI) at the motor generator (6) when a coast shift down is performed in a first state where the driving source (2) and the transmission (50) are disconnected from each other by the clutch (3) and the motor generator (6) is connected to the output shaft (42, 43) to receive the rotational torque transmitted from the driving wheel (Wr, WI), the control device (1) controlling the transmission (50) to receive the rotational torque of the output shaft (42, 43) at the driving source (2) by an engagement of the clutch (3) in a second state where the motor generator (6) is disconnected from the output shaft (42, 43) and does not receive the rotational torque.

2. The drive system (100) for the vehicle according to claim 1, wherein the driving source (2) corresponds to an engine.

3. The drive system (100) for the vehicle according to either claim 1 or 2, wherein the second state corresponds to a state where
a request for generating the rotational torque is not inputted to the driving source (2);
a rotary speed of the output shaft (42, 43) is decreased; and
a rotational connection of the output shaft (42, 43) and the motor generator (6) is temporarily released for a downshifting by the transmission (50).

4. The drive system (100) for the vehicle according to either claim 1 or 2, wherein the second state corresponds to a state where
a request for generating the rotational torque is not inputted to the driving source (2);
a rotary speed of the output shaft (42, 43) is increased; and
a rotational connection of the output shaft (42, 43) and the motor generator (6) is temporarily released for an upshifting by the transmission (50).

5. The drive system (100) for the vehicle according to claim 2, wherein in a state where a rotary speed of the motor generator (6) is decreased and prior to a timing for a gearshift of the transmission (50), the control device (1) controls the clutch (3) to be gradually engaged to increase the rotational torque transmitted from the driving wheel (Wr, WI) to the driving source (2) and to decrease the rotational torque transmitted from the driving wheel (Wr, WI) and received at the motor generator (6) to establish the second state.

6. The drive system (100) for the vehicle according to claim 1, wherein the control device (1) controls the clutch (3) to be completely engaged to maximize the rotational torque outputted to the driving source (2), the control device (1) controls an actuator which shifts gears of the transmission (50) to be activated when the rotational torque transmitted from the driving wheel (Wr, WI) and received at the motor generator (6) comes to be zero.

7. The drive system (100) for the vehicle according to claim 2, wherein when a gearshift is completed, the control device (1) controls the clutch (3) to be gradually disengaged to decrease the rotational torque transmitted from the driving wheel (Wr, WI) to the driving source (2) and to increase the rotational torque transmitted from the driving wheel (Wr, WI) and received at the motor generator (6).

8. The drive system (100) for the vehicle according to claim 3, wherein the control device (1) controls the clutch (3) to be completely disengaged so that the motor generator (6) sorely receives the rotational torque transmitted from the driving wheel (Wr, WI).

9. A controlling method for a drive system (100) for a vehicle, the drive system (100) for the vehicle comprising:
a driving source (2) generating a rotational torque;
a motor generator (6) generating the rotational torque by an application of electric power, the motor generator (6) generating electricity by receiving the rotational torque of an output shaft (42, 43) rotationally connected to a driving wheel (Wr, WI);
a transmission (50) selectively connecting and rotationally connecting at least one of the driving source (2) and the motor generator (6) to the output shaft (42, 43);
a clutch (3) connecting the driving source (2) to the transmission (50) and disconnecting the driving source (2) from the transmission (50); and
a control device (1) controlling the transmission (50) to receive the rotational torque of the output shaft (42, 43) transmitted from the driving wheel (Wr, WI) at the motor generator (6) when a coast shift down is performed in a first state where the driving source (2) and the transmission (50) are disconnected from each other by the clutch (3) and the motor generator (6) is connected to the output shaft (42, 43) to receive the rotational torque transmitted from the driving wheel (Wr, WI), the control device (1) controlling the transmission (50) to receive the rotational torque of the output shaft (42, 43) at the driving source (2) by an engagement of the clutch (3) in a second state where the motor generator (6) is disconnected from the output shaft (42, 43) and does not receive the rotational torque.
